# EUROPEAN PATENT SPECIFICATION

(11) **EP 1 193 124 B1**
(45) Date of publication and mention of the grant of the patent: **12.04.2006**
(21) Application number: 01308386.0
(22) Date of filing: 01.10.2001
(51) Int. Cl.: B60P 7/08, B60P 7/12, B62D 25/20

(54) **Transport unit floor comprising a track for a load handling skate**
Boden einer Transporteinheit mit einer Schiene für einen Lastförderwagen
Fond d'une unité de transport comprenant un rail pour un chariot porte-charge

(30) Priority: 02.10.2000 GB 0024043
(43) Date of publication of application: 03.04.2002
(73) Proprietor: Blackrock Engineering Limited, Great Budworth, Nr. Northwich, Cheshire CW9 6HF (GB)
(72) Inventor: Kordel, Wojciech, Joseph, Cheshire, CW9 6HF, UK (GB)
(74) Representative: Cardwell, Stuart Martin

(56) References cited:
- EP-A- 0 982 188
- GB-A- 2 200 600
- US-A- 5 193 700
- US-A- 6 007 282
- US-A- 6 099 220

## Description

The present invention relates to a transport unit floor comprising a track for a load handling skate.

Load handling skates are widely used for moving loads - palletised or otherwise; within freight transportation units be they self contained containers or as part of motorised vehicles or articulated freight trailers, or otherwise.

The present invention is particularly concerned with the tracks in which the load handling trolleys run, which tracks are built into the floor of the transportation unit.

The existing design of track comprises an elongate channel which as viewed in section can be described as comprising an inverted top hat section. It has an open top channel in which the load handling skate runs, and each side of the open mouth is flanked by a flange. The depth of the channel corresponds to the depth of the flooring material of the transportation unit. Usually a wooden material used for the floor. When such a channel is installed into the floor of a transportation unit, the flanges are placed so that they lie flush with the floor surface. This involves providing a groove in the flooring, and relieving the upper surface of the flooring adjacent the groove to receive the two flanges. This is time consuming. Furthermore, the flanges have to be drilled at positions aligned with transverse support bearers for the floor of the transportation unit, to receive fixing screws to secure the track in place. The existing track design has the disadvantages that advanced single slot fixing systems cannot be utilised. Hence installing the existing track is time consuming.

GB 2 200 600 A, US 5 193 700 A and US 6 007 282 disclose various transport unit floors employing corrugated profiles.

The present invention aims to provide a solution.

Accordingly, the present invention provides a transport unit floor incorporating a plurality of tracks for use with a load handling skate, each track comprising an elongate element which as viewed in cross-section has an open top channel comprising a base and two spaced track side walls extending upwardly from the base, and a pair of location flanges being disposed in substantially the same plane, and connected to an upper end of an adjacent one of the upwardly extending sidewalls by a respective connecting limb portion the tracks being installed in spaced side by side relation and the spaces between the tracks being in-filled with flooring sheets which are cut to fit the floor space up to the outside walls of the tracks and overlying the aforementioned flanges, and having their upper surface substantially flush with the upper extent of the track sidewalls.

The invention also provides a method of manufacturing such a transport unit floor.

The connecting limb portion comprises a downwardly extending outer sidewall connected to the flange and sidewall. The downwardly extending sidewall is preferably substantially vertical. It may be connected to the track sidewall by a bend tuming through 180° so as the lie in closely spaced relation to the track side wall. More, preferably, the connecting limb further comprises a substantially horizontal element disposed between the upper end of the track side wall and the upper end of the outer side wall so as to space apart the track side wall and the outer side walls. Connection is by respective corners turning through 90°.

The horizontal element conveniently has a plurality of through holes formed therein at spaced intervals along the length thereof. The function of these holes will be described further hereinafter.

For a typical installation four tracks are installed in spaced side by side relation in the transport unit. The aforementioned location flanges and base will abut with transverse cross-bearers of the transport unit on which the floor is supported. A waterproof strip is preferably interposed along the length of the track between the cross-bearers and the track. A spacing strip corresponding in - thickness to the thickness of the flanges is fitted to the transverse bearers. The spaces between the tracks are infilled with flooring sheets which are cut to fit the floor space up to the outside walls of the tracks. Usually the flooring will be a timber or plastics laminate. It overlies the aforementioned flanges and its upper surface is flush with the upper extent of the track sidewalls and the aforementioned horizontal element when provided.

The track and flooring can be secured in place by screws passing through the flooring, through the flanges and into the cross bearer. The track will be of metal and the cross-bearer are usually metal. A pilot drill could be used, but the construction renders possible the use of one shot fixing systems in which the decking screws have a cutting bit at the leading end which will drill a pilot hole through the timber flooring of sufficient diameter to receive the following screw shank, and which will also cut a pilot hole in both the flange and the cross bearer, before shearing off. Thus the installation of the track is simplified.

The aforementioned holes in the horizontal elements are disposed at regular intervals along the length of the track. The holes in one horizontal element are transversely aligned with those in the other horizontal element. The spacing of the holes along the track is equal to or a divisible fraction of the distance between the holes as viewed across the track. The holes are used as locating positions for releasable chock elements. The preferred chock element has at least two pegs projecting from the base thereof. The spacing of the pegs is equal to the lateral spacing of the holes. This and spacing of the holes in the track allows the chock to be positioned in one of four orientations which are at 90° to each other with respect to the track. More preferably the chock has four pegs set at the corners of a square and with the distance between centres corresponding to the lateral spacing of the holes in the track. The preferred chock has an adjustment mechanism allowing adjustment by an amount up to the longitudinal spacing of the holes in the track.

The present invention will now be described by way of example only with reference to the accompanying drawings, in which: -
Figure 1 is a perspective view of part of a length of track embodying the invention,
Figure 2 is a plan view of a length of track,
Figure 3 is a cross-section through a length of track in its installed position,
Figure 4 is a perspective view of a vehicle installed with the track and further utilising the use of chocks, and
Figures 5 and 6 illustrates side and rear views of a chock for use with the track.

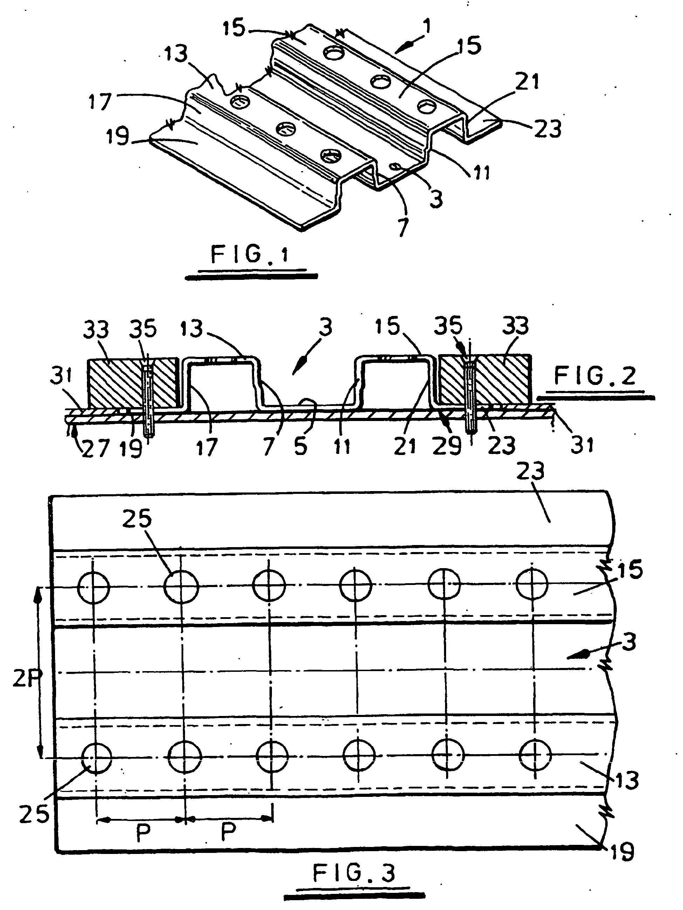

A perspective view of part of an elongate track 1 for receiving a load handling skate as illustrated in Figure 1. It comprises a metal profile formed either by extrusion or folding which has a central open top channel 3 defined by a base 5 and two spaced track side walls 7, 11. The sidewalls extend upwardly substantially vertically from the base 5. The upper ends of the respective track side walls are turned through 90° to define horizontal elements 13, 15 which then turn through 90° to define outer side walls 17, 21. The outer side walls are substantially vertical and extend in a direction towards a plane containing the base 5 where they turn through 90° outwardly to define outer locating flanges 19, 23 which are disposed in the same plane as the base 5. Thus in effect the track has a corrugated section comprising two raised ribs separated by a recess.

The horizontal elements 13, 15 of the two raised ribs have formed therein a plurality of holes 25, which are spaced at regular intervals P along the length of the track. The holes in one rib are aligned transversely with the holes in the other rib. The lateral spacing of the holes is twice that of the longitudinal spacing of the holes in the illustrated embodiment.

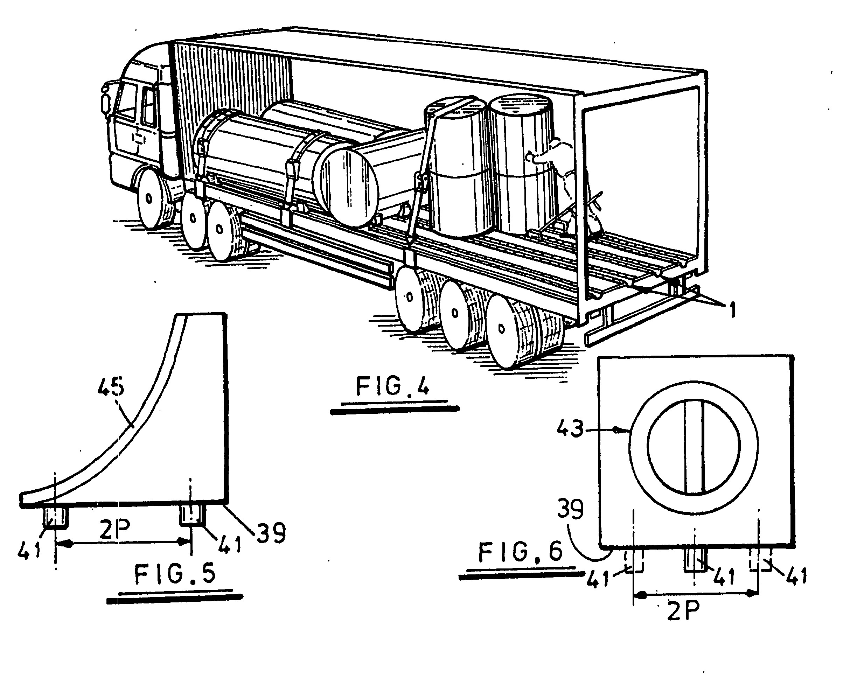

Reference is now made to Figure 2 in order to explain how the track is installed as part of the floor of a freight transport unit. The floor is mounted on a plurality of longitudinal spaced transverse metal bearers 27. A typical freight transport unit may have four tracks running along the length thereof and spaced transversely along the width thereof as seen in Figure 4. The tracks are laid on to the bearers with a waterproof strip 29 interposed between the bearers and the track. Usually this is a steel strip. Thus the base 5 and flanges 19, 23 but the track albeit indirectly by way of the waterproof strip. Shims 31 having a thickness substantially equal to the thickness of the flanges 19, 23 plus the thickness of the Strip 29 are laid on to the bearers 27. Then pieces of laminate flooring 33 are cut to size to fit the spaces of the floor between the respective outer flanges of the tracks and for the edges of the transport unit as appropriate. These strips of flooring run on to the top of the flanges 19, 23 as can be seen from Figure 2. The track and the flooring is secured in place using a plurality of decking screws 35. It is seen that these have counter sunk heads and that they are screwed into the bearers 27.

In the prior art track the equivalent of the locating flanges 19, 23 were uppermost and thus it was necessary to drill a hole through the flange and then through the flooring and to drill a pilot hole in the bearers 27 in order to insert the decking screws. However, with a configuration according to the invention a one shot fixing system can be used in which the fixing elements themselves have a cutting tool at the end which will form the pilot holes in the flooring and also pilot holes in the flanges 19, 23 and bearers 27 but this is not possible when the locating flanges are uppermost.

Reference is now made to Figures 5 and 6 which show a side and rear view of a chock member which is intended for use with the aforedescribed track. To this end in one embodiment the base of the chock has two pegs 41 set on the centre line of the chock with the spacing of the pegs corresponding to the lateral spacing 2P of the holes 25 in the track. In another embodiment four pegs 41' are provided set on a square at spacings 2P. Thus it will be appreciated that the chock can be fitted in any one of four orientations disposed at 90° to one another to provide lateral or longitudinal chocking. In addition the chock incorporates an adjustment facility whereby the chocking shoe 45 can be moved by up to a distance P corresponding to the longitudinal spacing of the holes 25. Adjustment uses a cam or screw operating mechanism operated by wheel 43 to move the chocking shoe 45. The chocking shoe can be of any convenient shape according to the loads to be chocked.

## Claims

1. A transport unit floor incorporating a plurality of tracks (1) for use with a load handling skate, each track comprising an elongate element which as viewed in cross-section has an open top channel (3) comprising a base (5) and two spaced track side walls (7, 11) extending upwardly from the base, and a pair of location flanges (19, 23) being disposed in substantially the same plane, and connected to an upper end of an adjacent one of the upwardly extending sidewalls by a respective connecting limb portion (13, 15, 17, 21), the tracks being installed in spaced side by side relation and the spaces between the tracks being in-filled with flooring sheets (33) which are cut to fit the floor space up to the outside walls of the tracks and overlying the aforementioned flanges, and having their upper surface substantially flush with the upper extent of the track sidewalls.

2. A transport unit floor as claimed in claim 1, **characterised In that** the track (1) and flooring (33) are supported on transverse cross-bearers (27).

3. A transport unit floor as claimed in claim 2, **characterised in that** the track (1) and flooring (33) is secured in place by screws (35) passing through the flooring, through the flanges (19,23) and into the cross-bearer (27).

4. A transport unit floor as claimed in claim 1, 2 or 3, **characterised in that** each track connecting limb portion (13,15,17,21) comprises a downwardly extending outer sidewall (17,21) connected between said flange (19,23) and said track sidewall (7,11).

5. A transport unit floor as claimed in claim 4, **characterised in that** the downwardly extending sidewall (17,21) is substantially vertical.

6. A transport unit floor as claimed in claim 4 or 5, **characterised in that** the downwardly extending sidewall (17,21) is connected to the track sidewall (7,11) by a bend tuming through 180° so as to lie in closely spaced relation to the track side wall.

7. A transport unit floor as claimed in claim 4 or 5, **characterised in that** the connecting limb (13,15,17,21) further comprises a substantially horizontal element (13,15) disposed between the upper end of the track side wall (7,11) and the upper end of the outer side wall (17,21) so as to space apart the tack side wall and the outer side walls.

8. A transport unit floor as claimed in claim 7, **characterised in that** there are 90° bends between the horizontal element (13,15) and the respective sidewalls.

9. A transport unit floor as claimed in claim 7 or 8, **characterised in that** the horizontal element (13,15) has a plurality of through holes (25) formed therein at spaced intervals along the length thereof.

10. A transport unit floor as claimed in any one of claims 3 to 9 in combination with claim 2, **characterised in that** a spacing strip (31) corresponding in thickness to the thickness of the flanges (19,23) is fitted to the transverse cross-bearers (27).

11. A transport unit floor as claimed in any one of claims 3 to 10 in combination with claim 2, **characterised in that** a waterproof strip (29) is interposed along the length of the track (1) between the cross-bearers (27) and the track.

12. A method of manufacturing a transport unit floor as claimed in any one of claims 4 to 11, in combination with claim 3, chacacterised in that a one shot fixing system is employed in which the decking screws (35) have a cutting bit at the leading end which will drill a pilot hole through the flooring (33) of sufficient diameter to receive the following screw shank, and which will also cut a pilot hole in both the flange and the cross bearer (27), before shearing off.

## Patentansprüche

1. Boden einer Transporteinheit, welcher eine Vielzahl von Schienen (1) zur Verwendung mit einem Lastförderschlitten beinhaltet, wobei jede Schiene ein längliches Element umfasst, das im Querschnitt einen nach oben offenen Kanal (3) aufweist, der eine Grundfläche (5) und zwei voneinander beabstandete Schienenseitenwände (7, 11) aufweist, die sich von der Grundfläche nach oben erstrecken, und ein Paar Befestigungsflansche (19, 23) umfasst, welche im Wesentlichen in derselben Ebene angeordnet sind und mit einem oberen Ende einer der angrenzenden, sich nach oben erstreckenden Seitenwände durch einen jeweiligen verbindenden Schenkelabschnitt (13, 15, 17, 21) verbunden sind, wobei die Schienen beabstandet nebeneinander montiert sind und die Abstände zwischen den Schienen mit Bodenplatten (33) ausgefüllt sind, die so geschnitten sind, dass sie die Bodenfläche bis zu den äußeren Wänden der Schienen ausfüllen und auf den vorstehend erwähnten Flanschen aufliegen, wobei Ihre Oberfläche im Wesentlichen mit der oberen Höhe der Schienenseitenwände bündig abschließt.

2. Boden einer Transporteinheit nach Anspruch 1, **dadurch gekennzeichnet, dass** die Schiene (1) und der Bodenbelag (33) auf quer verlaufenden Querträgern (27) abgestützt sind.

3. Boden einer Transporteinheit nach Anspruch 2, **dadurch gekennzeichnet, dass** die Schiene (1) und der Bodenbelag (33) mittels Schrauben (35) befestigt sind, die durch den Bodenbelag, durch die Flansche (19, 23) und in den Querträger (27) reichen.

4. Boden einer Transporteinheit nach Ansprüchen 1, 2 oder 3, **dadurch gekennzeichnet, dass** jeder Schienenverbindungsschenkelabschnitt (13, 15, 17, 21) eine sich nach unten erstreckende, äußere Seitenwand (17, 21) umfasst, die zwischen besagtem Flansch (19, 23) und besagter Schienenseitenwand (7, 11) verbunden ist.

5. Boden einer Transporteinheit nach Anspruch 4, **dadurch gekennzeichnet, dass** die sich nach unten erstreckende Seitenwand (17, 21) im Wesentlichen senkrecht ist.

6. Boden einer Transporteinheit nach Ansprüchen 4 oder 5, **dadurch gekennzeichnet, dass** die sich nach unten erstreckende Seitenwand (17, 21) mit der Schienenseitenwand (7, 11) durch eine sich um 180° drehende Biegung verbunden ist, so dass sie bezüglich der Schienenseitenwand nah beabstandet ist.

7. Boden einer Transporteinheit nach Ansprüchen 4 oder 5, **dadurch gekennzeichnet, dass**i der verbindende Schenkel (13, 15, 17, 21) im Weiteren ein im Wesentlichen waagrechtes Element (13, 15) umfasst, das zwischen dem oberen Ende der Schienenseitenwand (7, 11) und dem oberen Ende der äußeren Seitenwand (17, 21) angeordnet ist, so dass die Schienenseitenwand und die äußeren Seitenwände beabstandet sind.

8. Boden einer Transporteinheit nach Anspruch 7, **dadurch gekennzeichnet, dass** zwischen dem waagrechten Element (13, 15) und den jeweiligen Seitenwänden 90° Biegungen vorhanden sind.

9. Boden einer Transporteinheit nach Ansprüchen 7 oder 8, **dadurch gekennzeichnet, dass** im waagrechten Element (13, 15) eine Vielzahl von Durchgangsöffnungen (25) gebildet sind, die in regelmäßigen Abständen entlang dessen Länge angeordnet sind.

10. Boden einer Transporteinheit nach einem der Ansprüche der 3 bis 9, in Verbindung mit Anspruch 2, **dadurch gekennzeichnet, dass** eine Abstandsleiste (31), deren Stärke der Stärke der Flansche (19, 23) entspricht, an den quer verlaufenden Querträgern (27) befestigt ist,

11. Boden einer Transporteinheit nach einem der Ansprüche 3 bis 10, in Verbindung mit Anspruch 2, **dadurch gekennzeichnet, dass** ein wasserdichter Streifen (29) entlang der Länge der Schiene (1) zwischen den Querträgern (27) und der Schiene eingeschoben ist.

12. Verfahren zur Herstellung eines Bodens einer Transporteinheit nach einem der Ansprüche 4 bis 11, in Verbindung mit Anspruch 3, **dadurch gekennzeichnet, dass** ein Einzelbefestigungssystem verwendet wird, bei dem die Kopfschrauben (35) eine Bohrschneide an der Spitze aufweisen, welche eine Vorbohrung durch den Bodenbelag (33) mit einem ausreichenden Durchmesser bohrt, um den nachfolgenden Schraubenschaft aufzunehmen und vor dem Abscheren auch eine Vorbohrung sowohl in den Flansch als auch in den Querträger (27) schneidet.

## Revendications

1. Plancher d'unité de transport incorporant une pluralité de pistes (1) pour une utilisation avec une transpalette de manipulation des charges, chaque piste comprenant un élément allongé qui, vu en coupe transversale, a un canal supérieur ouvert (3) comprenant une base (5) et deux parois latérales de piste espacées (7, 11) s'étendant vers le haut à partir de la base, et une paire de rebords d'emplacement (19, 23) agencés sensiblement dans le même plan, et reliés à une extrémité supérieure de l'une adjacente des parois latérales s'étendant vers le haut par une partie de branche de raccordement respective (13, 15, 17, 21), les pistes étant installées les unes à côté des autres, de façon espacée, et les espaces entre les pistes étant remplis de feuilles de plancher (33) coupées de manière à être ajustées à l'espace de plancher jusqu'aux parois extérieures des pistes et recouvrant les rebords susmentionnés, et dont la surface supérieure affleure sensiblement l'étendue supérieure des parois latérales de piste.

2. Plancher d'unité de transport selon la revendication 1, **caractérisé en ce que** la piste (1) et le plancher (33) sont supportés par des traverses de caisse transversales (27).

3. Plancher d'unité de transport selon la revendication 2, **caractérisé en ce que** la piste (1) et le plancher (33) sont fixés en, place par des vis (35) passant à travers le plancher, à travers les rebords (19, 23) et dans la traverse de caisse transversale (27).

4. Plancher d'unité de transport selon la revendication 1, 2 ou 3, **caractérisé en ce que** chaque partie de branche de raccordement de pistes (13, 15, 17, 21), comprend une paroi latérale extérieure s'étendant vers le bas (17, 21) raccordée entre ledit rebord (19, 23) et ladite paroi latérale de piste (7,11).

5. Plancher d'unité de transport selon la revendication 4, **caractérisé en ce que** la paroi latérale s'étendant vers le bas (17, 21) est sensiblement verticale.

6. Plancher d'unité de transport selon la revendication 4 ou 5, **caractérisé en ce que** la paroi latérale s'étendant vers le bas (17, 21) est raccordée à la paroi latérale de piste (7,11) par un pli à 180°, de manière à être dans une relation espacée de façon proche par rapport à la paroi latérale de piste.

7. Plancher d'unité de transport selon la revendication 4 ou 5, **caractérisé en ce que** le rebord de raccordement (13, 15, 17, 21) comprend en outre un élément sensiblement horizontal (13, 15) agencé entre l'extrémité supérieure de la paroi latérale de piste (7, 11) et l'extrémité supérieure de la paroi latérale extérieure (17, 21) de manière à espacer la paroi latérale de piste et les parois latérales extérieures.

8. Plancher d'unité de transport selon la revendication 7, **caractérisé en ce qu'**il y a des plis à 90 ° entre l'élément horizontal (13, 15) et les parois latérales respectives.

9. Plancher d'unité de transport selon la revendication 7 ou 8, **caractérisé en ce que** l'élément horizontal (13, 15) a une pluralité d'orifices de passage (25) formés à intervalles espacés sur sa longueur.

10. Plancher d'unité de transport selon l'une quelconque des revendications 3 à 9 en combinaison avec la revendication 2, **caractérisé en ce qu'**une bande d'espacement (31) correspondant en épaisseur à l'épaisseur des rebords (19, 23) est ajustée sur les traverses de caisse transversales (27).

11. Plancher d'unité de transport selon l'une quelconque des revendications 3 à 10 en combinaison avec la revendication 2, **caractérisé en ce qu'**une bande imperméable (29) est interposée sur la longueur de la piste (1) entre les traverses de caisse transversales (27) et la piste.

12. Procédé de fabrication d'un plancher d'unité de transport selon l'une quelconque des revendications 4 à 11 en combinaison avec la revendication 3, **caractérisé en ce qu'**un système de fixation en un coup est employé, dans lequel les vis de plancher (35) ont un trépan tranchant au niveau de l'extrémité avant qui forera un orifice de guidage à travers le plancher (33) d'un diamètre suffisant pour recevoir la tige de la vis, et qui coupera également un orifice de guidage dans le rebord ainsi que dans la traverse de caisse transversale (27), avant cisaillement.
